# EUROPÄISCHE PATENTSCHRIFT

(11) **EP 0 772 559 B1**
(45) Veröffentlichungstag und Bekanntmachung des Hinweises auf die Patenterteilung: **07.07.1999**
(21) Anmeldenummer: 96913427.9
(22) Anmeldetag: 22.05.1996
(51) Int. Cl.: B65G 1/06, B65G 39/20, B65G 17/40, B65G 17/08, B65G 21/22

(54) **KETTENFÖRDERER**
CHAIN CONVEYOR
TRANSPORTEUR A CHAINE

(30) Priorität: 26.05.1995 CH 156295
(43) Veröffentlichungstag der Anmeldung: 14.05.1997
(73) Patentinhaber: Gilgen Fördersysteme AG, 3173 Oberwangen (CH)
(72) Erfinder: HALDIMANN, Hans-Rudolf, CH-6900 Lugano (CH)
(74) Vertreter: Rottmann, Maximilian R.
(86) Internationale Anmeldenummer: CH9600198
(87) Internationale Veröffentlichungsnummer: WO9637422

(56) Entgegenhaltungen:
- WO-A-94/00370
- FR-A- 1 186 142

## Beschreibung

Die Erfindung betrifft einen Kettenförderer gemäss dem Oberbegriff des Anspruchs 1.

Kettenförderer der hier zur Rede stehenden Art werden zum Beispiel in Lagerfächern von Regallageranlagen eingebaut, wo sie als Fördermittel für die einzulagernden Güter dienen. Das Fördermittel ist üblicherweise eine mit Rollen versehene Förderkette, deren beide Enden über ein Gurtband miteinander zu einer endlos umlaufenden Schleife verbunden sind. Als Untersatz für die einzulagernden Güter kommen meist Paletten zum Einsatz. Beim Einlagern der Güter werden letztere auf die Förderkette gelegt und, z.B. von einem Gabelstapler, in das Regal hineingeschoben, um bei Bedarf von diesem auch wieder herausgezogen zu werden. Die Schwierigkeit bei derartigen Kettenförderern besteht darin, dass einerseits die Rollreibung der Kette auf der Tragschiene so klein wie möglich gehalten werden soll. Andererseits muss die Kette, insbesondere bei langen, tiefen Regalen, seitlich exakt geführt werden, damit die Rollenkette nicht von der Tragschiene springt und damit auch die seitlichen Toleranzen des Regals möglichst klein gehalten werden können, so dass der zur Verfügung stehende Raum optimal genutzt werden kann.

Aus der WO 94/00370 ist ein "Palettentragschiene zur Förderung von Paletten und Behältern" genannter Kettenförderer bekannt, welcher den vorgängig aufgeführten Problemen Rechnung trägt. Dieser Kettenförderer ist zu diesem Zweck mit einer Rollenkette versehen, deren Tragrollen paarweise auf beiden Seiten durch ein Paar von Seitenlaschen verbunden sind, welche soweit nach unten vorstehen, dass sie das obere Trum der Rollenkette seitlich entlang der Laufschiene führen können, wobei die Laufschiene dazu in ihrer Breite kleiner ist als der Abstand der beiden Seitenlaschen eines Paares. Im unteren Bereich weist die aus Aluminium gefertigte Laufschiene einen geschlossenen Rücklaufkanal auf, in welchem das untere Trum der Rollenkette aufgenommen, geführt und vertikal abgestützt ist.

Die Problematik bei der vorgängig geschilderten Ausführungsform eines Kettenförderers besteht darin, dass die Seitenlaschen der Rollenkette sowohl Zug- wie auch Führungskräfte aufnehmen müssen. Werden nun die Seitenlaschen aus einem Material hergestellt, das gut selbstschmierende Eigenschaften aufweist, wie z.B. PTFE oder Polyethylen, so genügt deren Zugfestigkeit nicht oder aber die Elemente müssen sehr grosse Querschnitte aufweisen, was zu hohen Kosten führt. Werden die Teile aus Verbundmaterial hergestellt, sind die Kosten noch höher. Werden sie aus Stahl gefertigt, so bringt dies den Nachteil mit sich, dass die Reibwerte zwischen Rollenkette und Führungsschiene relativ hoch sind. Dies trifft insbesondere auch für das untere, im geschlossenen Rücklaufkanal aufgenommene Kettentrum zu, da hier von den Seitenlaschen zusätzlich das Eigengewicht der Rollenkette aufgenommen werden muss. Durch die hohen, zwischen Rollenkette und Tragschiene entstehenden Reibwerte wird die Baulänge eines solchermassen ausgestalteten Kettenförderers beschränkt. Zudem hat sich gezeigt, dass durch die Zugbelastung auf den gleichzeitig als Führungsmitteln ausgebildeten Seitenlaschen die Reibungswiderstände zusätzlich erhöht werden.

Aus der FR 1 186 142 ist ein mit einer Rollenkette versehener Kettenförderer bekannt, dessen Rollenkette sich insbesondere für mit Kurven versehen Förderwege eignet. Zur seitlichen Führung des oberen Kettentrums sind an den Kettenlaschen angeordnete Führungsrollen vorgesehen, deren Tragachse einen Winkel von 90° mit der Tragachse der Tragrollen einschliessen. Die horizontale Führungsbahn für die Tragrollen wird durch einen in die Oberseite der Tragschiene eingelassenen Schlitz gebildet. Zur Führung und Abstützung der Kette beim Umlenken ist die Tragachse der Führungsrollen mit seitlich angeordneten Rollen versehen.

Es ist daher die Aufgabe der Erfindung, einen Kettenförderer der im Oberbegriff des Anspruchs 1 beschriebenen Art, unter Vermeidung der vorgängig aufgeführten Nachteile, zu schaffen, welcher mit sehr geringen Reibungswiderständen zwischen Rollenkette und Tragschiene aufwartet, der einfach im Aufbau ist und zudem kostengünstig hergestellt werden kann.

Diese Aufgabe wird durch die im Kennzeichen des Anspruchs 1 aufgeführten Merkmale gelöst.

Durch die beschriebene Ausbildung der Führungselemente wird einerseits eine Trennung der Aufgaben der von der Kettenspannung beaufschlagten Laschen und der Führungselemente erreicht, so dass sowohl die Laschen wie auch die Führungselemente ohne Kompromisse bezüglich der Formgebung aus dem jeweils bestgeeignetsten Material gefertigt werden können. Zudem kann der Aufbau der Tragschiene sehr einfach gehalten werden. Schliesslich wird durch die beschriebene Ausbildung der Tragschiene auch die Führung und Abstützung des unteren Kettentrums sichergestellt.

Bevorzugte Ausführungsformen der Erfindung sind in den abhängigen Ansprüchen 2 bis 17 umschrieben.

So ist bei einer bevorzugten Ausbildung des Kettenförderers vorgesehen, die Laschen der Rollenkette, im Querschnitt gesehen, im wesentlichen U-förmig auszubilden, indem sie zwei Schenkel und einen dazwischen liegenden Basisteil aufweisen, wobei der Basisteil der Laschen des oberen Kettentrums nach oben gerichtet ist. Durch die U-förmige Gestaltung der Laschen und dem nach oben gerichteten Basisteil werden die Rollenkette und die obere Lauffläche der Tragschiene weitgehend vor Verschmutzung geschützt, dies insbesondere auch dann, wenn die grösste Länge des Basisteils, wie vorgeschlagen, zumindest annähernd dem Achsabstand von zwei benachbarten Tragrollen entspricht.

Schliesslich ist bei einer weiteren, bevorzugten Ausführung des Kettenförderers vorgesehen, die Rollenkette aus einheitlichen Laschen zu fertigen und diese bevorzugt wechselweise, um 180° um ihre Hochachse verdreht, derart anzuordnen, dass eine Lasche gegenüber der benachbarten Lasche, in Längsrichtung der Rollenkette gesehen, um jeweils die Wandstärke einer Lasche versetzt ist. Diese Ausführung einer Rollenkette ist besonders einfach und preisgünstig zu fertigen, da nur noch ein einziger Laschentyp hergestellt werden muss.

Die Erfindung wird nachfolgend anhand von Zeichnungen näher erläutert. In diesen Zeichungen zeigt:
- Fig. 1: eine einzelne Lasche für eine Rollenkette in drei unterschiedlichen Ansichten;
- Fig. 2: ein Führungselement in drei unterschiedlichen Ansichten;
- Fig. 3: einen Abschnitt einer Rollenkette in einer Ansicht von oben;
- Fig. 4: einen Abschnitt der Rollenkette in einer Seitenansicht;
- Fig. 5: eine schematische Darstellung eines Kettenförderers;
- Fig. 6: eine Seitenansicht eine schematisch dargestellten Kettenförderers;
- Fig. 7: den Kettenförderer in einer Ansicht von oben;
- Fig. 8: einen ersten Querschnitt durch eine Tragschiene sowie durch die Rollenkette entlang der Linie A-A in Fig. 3;
- Fig. 9: einen zweiten Querschnitt durch die Tragschiene sowie durch die Rollenkette entlang der Linie B-B in Fig. 3;
- Fig. 10: einen Querschnitt durch eine alternative Ausführungsform der Tragschiene sowie der Rollenkette;
- Fig. 11: eine erste, alternative Ausführungsform der Lasche in drei unterschiedlichen Ansichten, und
- Fig. 12: eine weitere, alternative Ausführungsform der Lasche in einer Ansicht von oben.

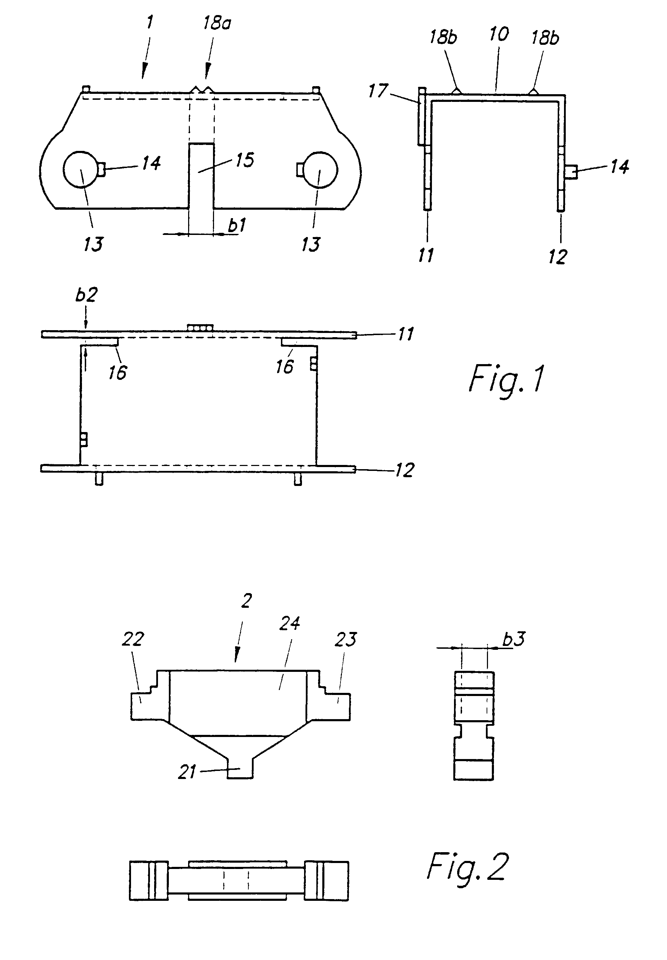

Fig. 1 zeigt eine Lasche 1 für eine Rollenkette in einem Aufriss, einem Seitenriss und einem Grundriss. Die Lasche 1 ist im wesentlichen U-förmig ausgebildet und weist einen Basisteil 10 sowie zwei Schenkel 11, 12 auf. Der zwischen den beiden Schenkeln 11, 12 liegende Basisteil 10 bildet dabei die obere Abdeckung der Lasche 1. Beide Schenkel 11, 12 der Lasche 1 sind mit Bohrungen 13 versehen, welche der Aufnahme von Bolzen zur Lagerung von Tragrollen dienen. Im weiteren sind nach aussen abstehende Fixierelemente 14 vorgesehen, welche zur Fixierung der Bolzen durch eine plastische Verformung derselben nach innen gebogen werden können. Zudem sind in der Mitte der Schenkel 11, 12 rechteckige Ausnehmungen 15 zur Anordnung von Führungselementen vorgesehen, wobei sowohl die Anordnung der Bolzen wie auch der Führungselemente nachfolgend noch näher erläutert wird. Der Basisteil 10 der Lasche 1 ist mit zwei entlang des einen Schenkels 11 angeordneten Aussparungen 16 versehen, deren Breite b2 grösser als die Wandstärke eines Schenkels 11, 12 ist. Durch diese Aussparungen 16 wird das Zusammenfügen von mehreren Laschen 1 zu einer Kette ermöglicht, indem ein Schenkel 11, 12 einer vorhergehenden oder nachfolgenden Lasche 1 in eine solche Aussparung 16 eingreift. Im Bereich der im hinteren Schenkel 11 liegenden Ausnehmung 15 weist die Lasche 1 einen nach oben gebogenen Seitenarm 17 auf, welcher endseitig mit Zacken 18a versehen ist. Auf der Oberseite der Lasche 1 sind zudem noch weitere Zacken 18b vorgesehen. Die Grundform einer solchen Lasche 1 wird vorzugsweise durch Stanzen hergestellt, währenddem die U-förmige Gestaltung durch anschliessendes Biegen des ausgestanzten Teils erzeugt wird.

Fig 2 zeigt ein Führungselement 2 in einem Aufriss, einem Seitenriss und einem Grundriss. Das Führungselement 2 weist eine im wesentlichen T-förmige Grundform auf, wobei diese jedoch leicht asymmetrisch gestaltet ist. Das Führungselement 2 ist auf beiden Seiten mit je einem Tragzapfen 22, 23 versehen. Der linke Tragzapfen 22 ist dabei um die Wandstärke eines Schenkels 11, 12 der Lasche 1 (Fig. 1) kürzer als der rechte Tragzapfen 23. Auf der Unterseite weist das Führungselement 2 einen Führungsnocken 21 auf. Der Mittelteil 24 des Führungselements 2 weist eine Breite b3 auf, welcher auf die Breite bl der Ausnehmungen 15 in den Schenkeln 11, 12 der Lasche 1 (Fig.1) abgestimmt ist, so dass das Führungselement 2 an den beiden Schenkeln der Lasche fixiert werden kann. Damit das Führungselement 2 sicher an der Lasche bzw. an dessen Schenkeln fixierbar ist, kann das Führungselement 2 in bekannter Weise mit Rast- und/oder Klemmorganen versehen sein, welche zugunsten einer übersichtlichen Darstellung jedoch nicht eingezeichnet sind.

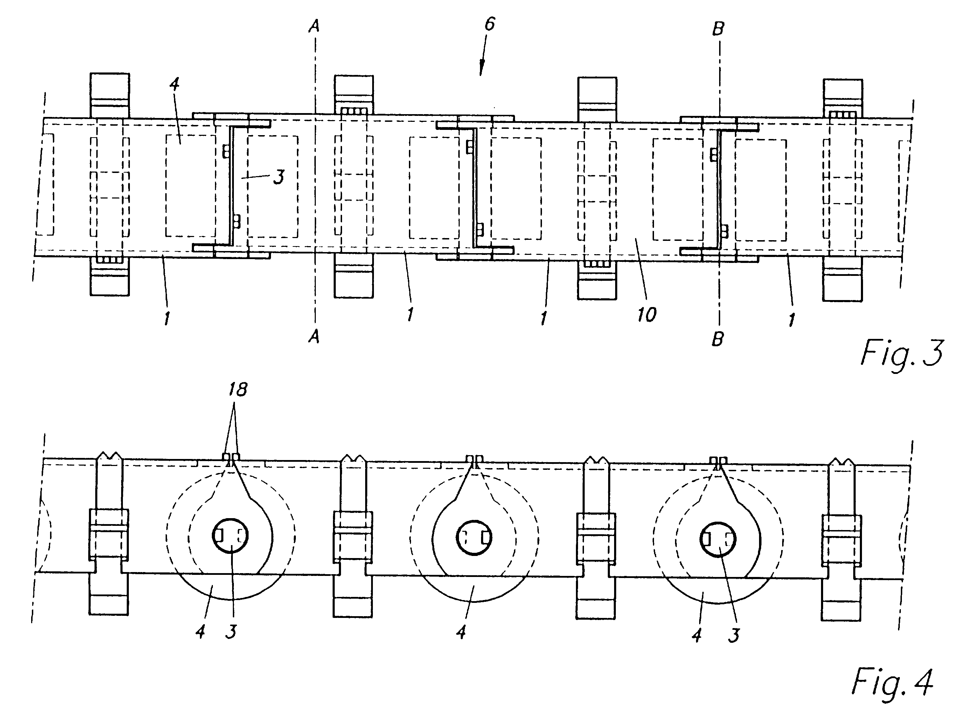

Fig. 3 zeigt einen Abschnitt einer Rollenkette in einer Ansicht von oben und Fig. 4 in einer Seitenansicht. Die Rollenkette 6 weist eine Mehrzahl von Laschen 1 und Führungselementen 2 auf. Jede Lasche 1 ist zudem mit einer Rolle 4 versehen, welche mittels Bolzen 3 gesichert sind. Die Rollenkette 6 ist aus einheitlichen Laschen 1 aufgebaut, wobei die einzelnen Laschen 1, wechselweise um 180° um ihre Hochachse verdreht, hintereinander angeordnet und um jeweils die Wandstärke eines Schenkels einer Lasche 1 versetzt werden. Zur gegenseitigen Fixierung der Laschen 1 werden die Bolzen 3 der Tragrollen 4 verwendet. Durch Umbiegen der Fixierelemente 14 (Fig. 1) können die Bolzen 3 in den Bohrungen 13 fixiert werden.

Die Führungselemente 2 sind in den Ausnehmungen 15 der Schenkel 11, 12 (Fig. 1) aufgenommen und fixiert. Das Fixieren kann dabei durch Klemmwirkung erfolgen; es ist jedoch auch denkbar, beispielsweise Rastnasen oder dergleichen vorzusehen. Die nach oben abstehenden Zacken 18 dienen in bekannter Weise der Kraftübertragung zwischen dem einzulagernden Gut, welches sich beispielsweise auf einer Holzpalette befindet, und der Rollenkette 6. Da sich die Zacken 18, im Falle der Verwendung von Holzpaletten, in letzteren einhaken, wird durch diese Zacken eine sichere Kraftschlussverbindung zwischen Palette und Rollenkette 6 erreicht.

Aus der Fig. 3 ist zudem ersichtlich, dass die Rollenkette 6 auf ihrer Oberseite weitgehend geschlossen ist. Dies wird dadurch erreicht, dass die Länge des Basisteils 10 jeder Lasche 1 zumindest annähernd dem Achsabstand von zwei benachbarten Tragrollen 4 entspricht.

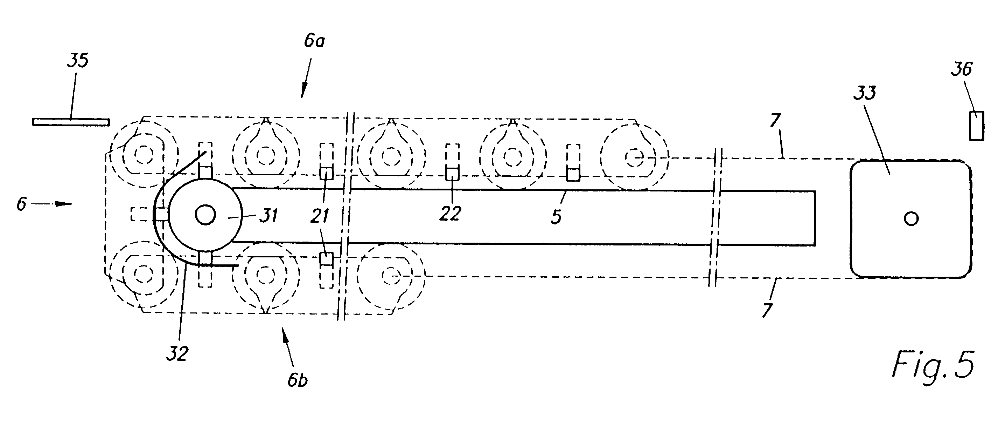

Fig. 5 zeigt in einer schematischen Darstellung eine mögliche Ausführung eines Kettenförderers. Der hier dargestellte Kettenförderer besteht aus einer Rollenkette 6, einer Tragschiene 5, Umlenkrollen 31, 33, Führungsmitteln 32 sowie einer Endrutsche 35. Die beiden Enden der Rollenkette 6 sind Uber einen Riemen 7 miteinander verbunden und über die beiden Umlenkrollen 31, 33 zu einem endlos umlaufenden Fördermittel geschlauft. Da die Rollenkette 6 nur auf der Oberseite der Tragschiene 5 Lasten aufnehmen muss, genügt es, ca. die Hälfte des umlaufenden Fördermittels als Rollenkette 6 auszubilden. Diese Ausbilung spart Kosten und Gewicht und verringert zudem die Gesamtreibung.

Die in dieser Darstellung auf der linken Seite angeordnete Umlenkrolle 31 ist im wesentlichen rund ausgebildet, währenddem die rechte Umlenkrolle 33 als Viereck mit abgerundeten Ecken ausgebildet ist. Diese Ausbildung dient der Längen-Kompensation des umlaufenden Fördermittels, da beim Umlenken der Rollenkette 6 ein Polygon-Effekt mit der Periode einer Kettengliedlänge auftritt. Um einerseits das Umlenken der Rollenkette 6 zu begünstigen und um andererseits bei höheren Kettengeschwindigkeiten die entstehenden Fliehkräfte aufzunehmen, sind auf der linken Seite im Bereich der Umlenkrolle 31 Führungsschienen 32 vorgesehen, an welchen die Oberseiten der Tragzapfen 21, 22 der Führungselemente 2 beim Umlenken zum Anliegen kommen.

Durch die linke Führungsrolle 31 wird die Rollenkette 6 in ein oberes und ein unteres Kettentrum 6a, 6b unterteilt.Am vorderen, einschubseitigen Ende des Kettenförderers ist eine Auslaufschiene 35 vorgesehen, mittels welcher überschüssige kinetische Energie des Systems beim Auslagern von Gütern aufgefangen werden kann, indem die auf der Rollenkette 6 gelagerten Güter auf dieser Schiene 35 auslaufen können. Die Länge, Beschaffenheit und Oberflächengestaltung dieser Auslaufschiene 35 hängt unter anderem von der maximalen Geschwindigkeit der Rollenkette 6 beim Entnehmen von Gütern sowie von deren Gewicht ab. Am hinteren Ende ist ein Anschlag 36 vorgesehen. Anstelle eines Anschlags 36 könnte jedoch durchaus auch eine Auslaufschiene angeordnet werden.

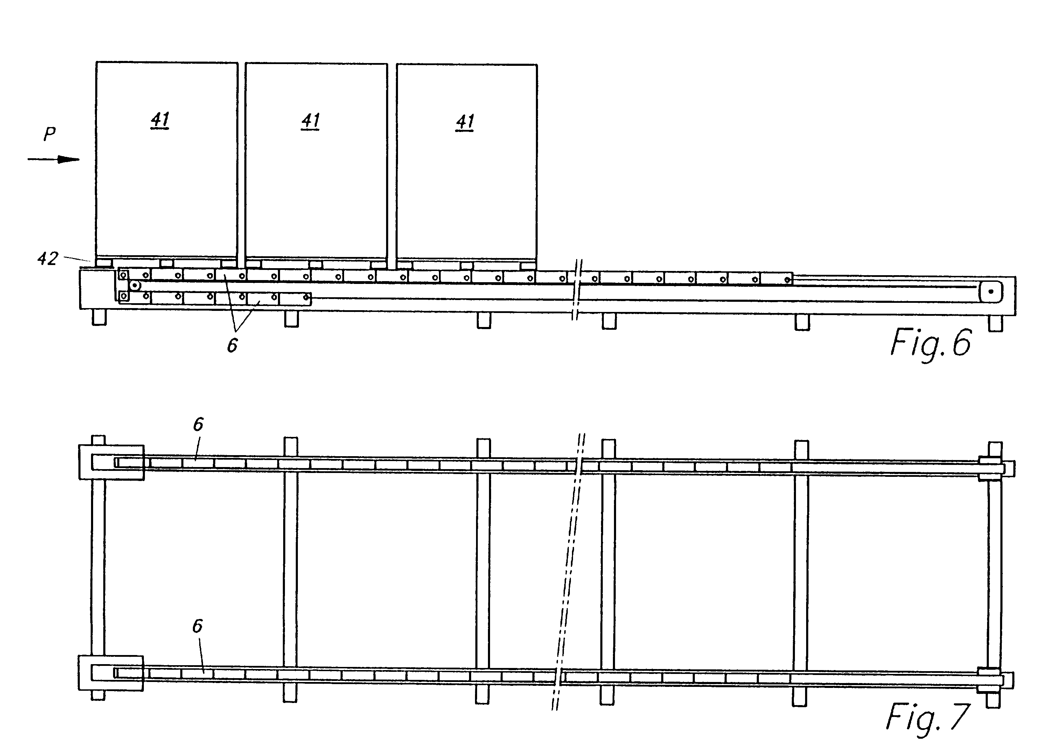

Fig. 6 zeigt schematisch einen Kettenförderer in einer Seitenansicht, währenddem dieser in Fig. 7 in einer Ansicht von oben dargestellt ist. In der Fig. 6 sind drei mit Gütern 41 beladene Paletten 42 dargestellt, welche auf der Föderkette 6 abgestellt und von dieser in beide Richtungen bewegt werden können. Um eine weitere Palette auf den Kettenförderer bzw. die Rollenkette 6 zu stellen, wird diese vorzugsweise von einem Gabelstapler von der Einschubseite P eingeschoben. Dabei kann, im vorliegend gezeigten Beispiel, über die äusserste Palette die gesamte Förderkette 6 und mit ihr die darauf abgestellten Güter nach hinten, im vorliegenden Beispiel nach rechts, geschoben werden. Sobald die einzulagernde Palette die Rollenkette berührt, wird letztere von der neuen Palette nach rechts verschoben. Die auf der Oberseite der Rollenkette 6 vorhandenen Zacken helfen dabei, eine sichere Kraftschlussverbindung zwischen Palette 42 und Rollenkette 6 herzustellen. Aus der Fig. 7 ist zudem ersichtlich, dass ein Fördersystem aus zwei parallel angeordneten Kettenförderern besteht.

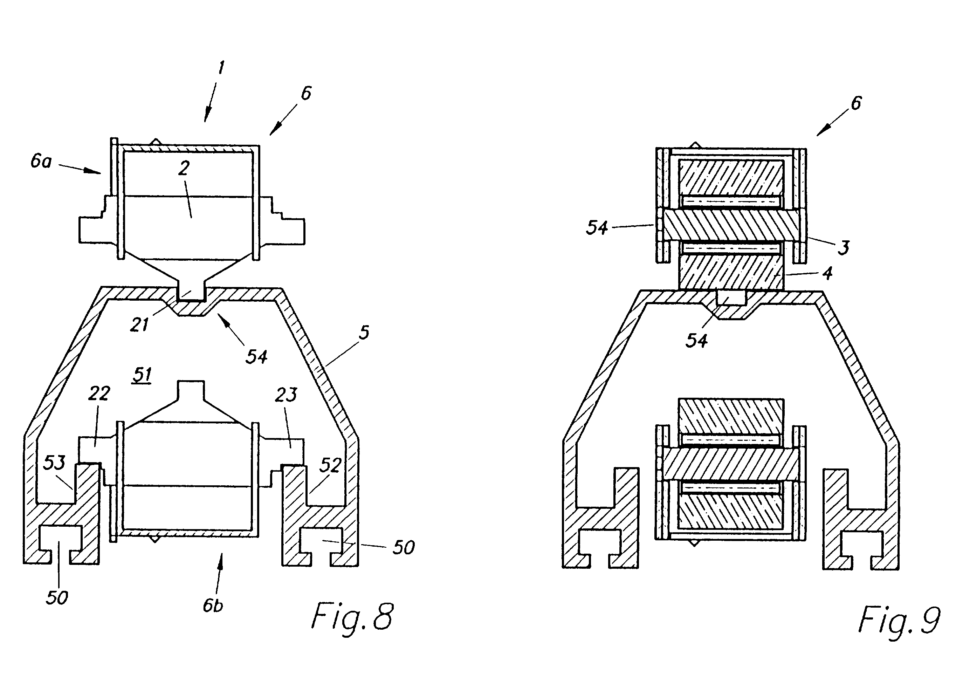

Fig. 8 zeigt einen Querschnitt durch die Tragschiene 5 und die Rollenkette 6 des Kettenförderers entlang der Linie A-A in Fig.3. Die Tragschiene 5 ist auf ihrer Oberseite mit einer Führungsnut 54 versehen, in welche der Führungsnocken 21 des Führungselements 2 eingreift und darin geführt wird. Die Tragschiene 5 ist zudem mit einem nach unten offenen Hohlraum 51 versehen. In diesem Hohlraum 51 sind zwei Hilfsschienen 52, 53 angeordnet, auf welchen die Tragzapfen 22, 23 des Führungselements 2 aufliegen und das untere Kettentrum 6 vertikal abstützen sowie seitlich führen. Zur Befestigung der Tragschiene 5 weist diese im unteren Bereich zwei T-Nuten 50 auf. Natürlich ist es auch denkbar, die Führungsschiene 5 mit Nuten zur seitlichen Befestigung der gesamten Führungsschiene zu versehen.

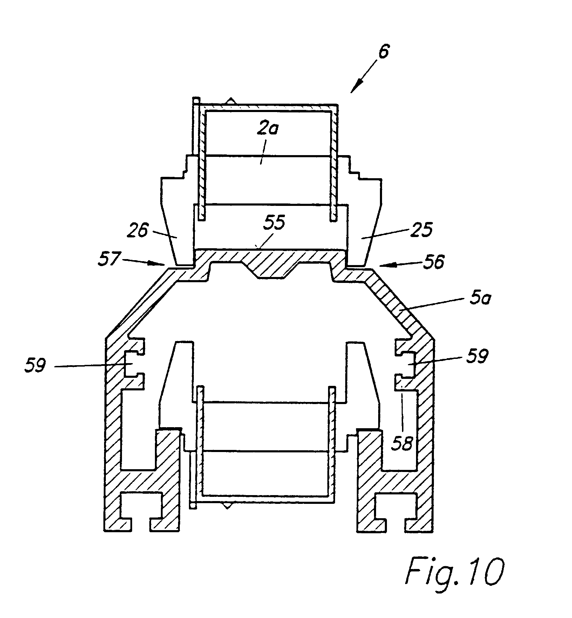

Fig. 9 zeigt einen zweiten Querschnitt durch die Tragschiene 5 sowie durch die Rollenkette 6 entlang der Linie B-B in Fig. 3. Aus diesem Schnitt sind die Tragrollen 4 sowie die Bolzen 3 der Rollenkette 6 ersichtlich. Die Bolzen 3 dienen in bekannter Weise als gelenkige Verbindung zwischen den einzelnen Laschen und wirken zudem als Tragachse für die Tragrollen 4.

Fig. 10 zeigt einen Querschnitt durch eine alternative Ausführungsform der Tragschiene 5a sowie der Rollenkette 6 bzw. der Führungselemente 2a. Die Tragschiene 5a weist in diesem Beispiel keine zentrale Führungsnut 54 (Fig. 9) auf, sondern besitzt eine obere Lauffläche 55, welche seitlich von zwei tiefer liegenden Führungsflächen 56, 57 begrenzt wird. Die Führungselemente 2a besitzen zwei seitliche Führungsarme 25, 26, welche die Lauffläche 55 zu den Führungsflächen 56, 57 hin nach unten übergreifen. Auf der Oberseite weisen die Führungsarme 25, 26 Gleitflächen im Sinne der vorgängig erläuterten Führungselemente 2 auf. Die Tragschiene 5a ist zudem mit zwei zusätzlichen T-Nuten 59 versehen. An diesen T-Nuten 59 kann beispielsweise eine Halterung für die Umlenkrollen befestigt werden. Ausserdem können einzelne Tragschienenabschnitte mittel dieser T-Nuten 59 miteinander verbunden werden.

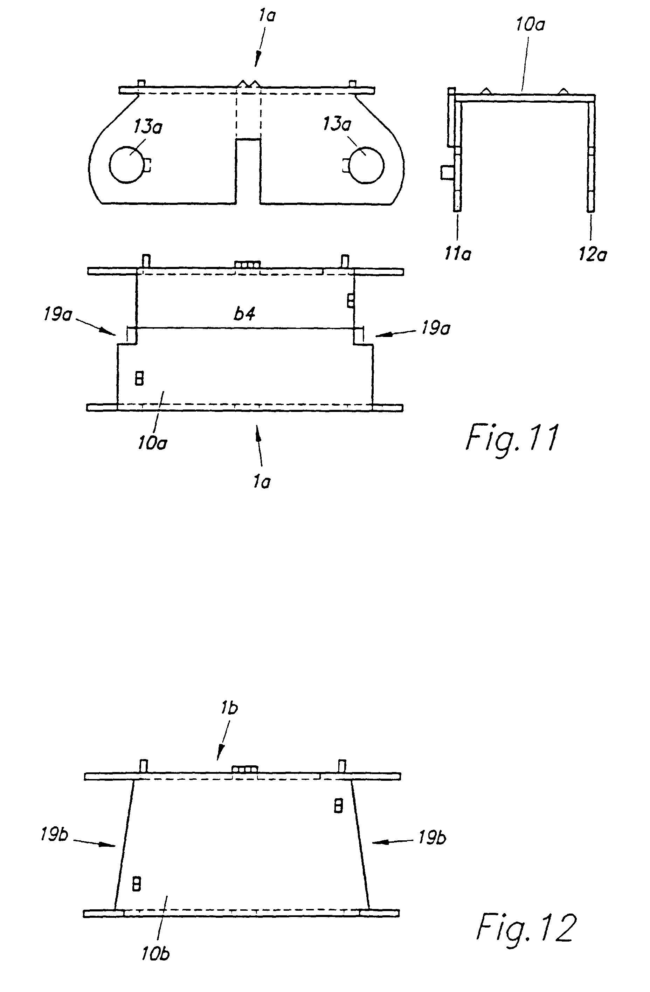

In Fig. 11 ist eine erste, alternative Ausführungsform einer Lasche in einem Aufriss, einem Seitenriss und einem Grundriss dargestellt. Diese Lasche la weist einen Basisteil 10a auf, dessen beide Endbereiche 19a mit einer Stufung versehen sind. Ausserdem sind die beiden Schenkel lla, 12a derart ausgestaltet, dass die Laschen la zu einer Kette zusammengefügt werden können, ohne dass der Basisteil 10a eine Aussparung 16 zur Aufnahme eines Schenkels 12 (Fig. 1) aufweisen muss. Eine aus derartigen Laschen la aufgebaute Rollenkette kann zwischen den einzelnen Laschen la auftretende Seitenkräfte über die im Endbereich 19a des Basisteils 10a angebrachte Stufung sehr gut aufnehmen.

Anstelle einer Stufung kann jedoch auch ein im Endbereich 19b abgeschrägter Basisteil vorgesehen werden, wie dies in der Fig. 10 dargestellt ist. Die mittlere Länge des jeweiligen Basisteils 10a, 10b ist geringfügig kürzer als der Achsabstand zweier benachbarter Rollen bzw. der vorgesehenen Bohrungen 13a. Unter mittlerer Länge ist bei einem im Endbereich schräg ausgebildeten Basisteil 10b die Mitte des Basisteils 10b zu verstehen, währenddem bei einem gestuften Basisteil 10a die Verbindung b4 zwischen den Mitten der jeweiligen Stufung zu verstehen ist.

Zusammenfassend kann festgehalten werden, dass ein mit den vorgängig aufgeführten Merkmalen versehener Kettenförderer gegenüber den aus dem Stand der Technik bekannten Kettenförderern eine geringere Reibung aufweist, dass er weniger anfällig auf Verschmutzung ist und dass er einfacher und preisgünstiger hergestellt werden kann.

Das Anwendungsgebiet eines derartigen Kettenförderers ist dabei nicht ausschliesslich auf Regallageranlagen beschränkt. Vielmehr kann der Kettenförderer an beliebiger Stelle eingesetzt werden. Ausserdem eignet sich ein derartiger Kettenförderer sowohl zum horizontalen Einbau wie auch zum Einbau auf einer leicht geneigten Ebene. Denkbar ist ausserdem auch, dass der Antrieb der Rollenkette des Kettenförderes über eine eigenständige Antriebsvorrichtung erfolgt.

## Patentansprüche

1. Kettenförderer mit einer Rollenkette (6), einer Tragschiene (5) zum vertikalen Abstützen der Rollenkette (6), sowie mit endseitig angeordneten Umlenkvorrichtungen (31, 32) zum Umlenken der Rollenkette (6) und zur Unterteilung derselben in ein oberes und ein unteres Kettentrum (6a, 6b), wobei die Rollenkette (6) eine Vielzahl von Tragrollen (4) aufweist, welche mittels Laschen (1) miteinander verbunden sind, und wobei eine Mehrzahl von diskret ausgebildeten Führungselementen (2) zur seitlichen Führung der Rollenkette (6) zwischen den Tragrollen (4) an der Tragschiene (5) vorgesehen sind, **dadurch gekennzeichnet**, dass die Tragschiene (5) auf ihrer Unterseite einen das untere Kettentrum (6b) zumindest teilweise aufnehmenden Hohlraum (51) aufweist, dass die Führungselemente (2) die Laschen (1) des oberen Kettentrums (6a) sowohl nach unten zur Führungsschiene (5) hin wie auch auf den Seiten überragen, und dass der die Laschen (1) nach unten überragende Bereich (21) der Führungselemente (2) zur Führung des oberen Kettentrums (6a) ausgebildet ist, wogegen der die Laschen (1) seitlich überragende Bereich (22, 23) der Führungselemente (2) zur Führung und vertikalen Abstützung des unteren, zumindest teilweise im Hohlraum (51) aufgenommenen Kettentrums (6b) ausgebildet ist.

2. Kettenförderer nach Anspruch 1, dadurch gekennzeichnet, dass im Hohlraum (51) der Tragschiene (5) zwei Hilfsschienen (52, 53) angeordnet sind, deren lichter Abstand grösser als die Breite einer Lasche (1), jedoch geringer als die Breite eines Führungselements (2) ist, so dass die die Lasche (1) seitlich überragenden Bereiche (22, 23) der Führungselemente (2) das untere Kettentrum vertikal an den Hilfsschienen (52, 53) abstützen.

3. Kettenförderer nach Anspruch 2, dadurch gekennzeichnet, dass die Laschen (1), im Querschnitt gesehen, im wesentlichen U-förmig ausgebildet sind, indem sie zwei Schenkel (11, 12) und einen dazwischen liegenden Basisteil (10) aufweisen, wobei der Basisteil (10) der Laschen (1) des oberen Kettentrums (6a) jeweils nach oben gerichtet ist.

4. Kettenförderer nach Anspruch 3, dadurch gekennzeichnet, dass die beiden Endbereiche des Basisteils (10) einer Lasche (1a, 1b) eine Stufung (19a) aufweisen oder schräg (19b) ausgebildet sind.

5. Kettenförderer nach einem der vorangehenden Ansprüche, dadurch gekennzeichnet, dass die mittlere Länge des Basisteils (10) zumindest annähemd dem Achsabstand von zwei benachbarten Tragrollen (4) entspricht, wobei der Basisteil (10) der Laschen (1) als obere Abdeckung der Rollenkette (6) ausgebildet ist und sowohl die Tragschiene (5) wie auch die Tragrollen (4) vor Verschmutzung schützt.

6. Kettenförderer nach einem der Ansprüche 3 bis 5, dadurch gekennzeichnet, dass der Basisteil (10) der Laschen auf der Oberseite als Auflagefläche für auf der Rollenkette (6) zu fördernde Güter ausgebildet und mit die horizontale Kraftübertragung zwischen den zu fördernden Gütern und der Rollenkette (6) erhöhenden Mitteln (18) versehen ist.

7. Kettenförderer nach Anspruch 5 oder 6, dadurch gekennzeichnet, dass der Basisteil (10) mit zwei entlang eines Schenkels (11, 12) angeordneten Aussparungen (16) versehen ist, deren Breite (b2) grösser als die Wandstärke eines Schenkels (11, 12) ist.

8. Kettenförderer nach einem der vorhergehenden Ansprüche, dadurch gekennzeichnet, dass die Rollenkette (6) aus einheitlichen Laschen (1, 1a, 1b) besteht.

9. Kettenförderer nach Anspruch 8, dadurch gekennzeichnet, dass benachbarte Laschen (1, 1a, 1b) jeweils in einer um 180° um ihre Hochachse verdrehten Lage hintereinander angeordnet sind, und dass benachbarte Laschen (1, 1a, 1b), in Längsrichtung der Rollenkette gesehen, um jeweils die Wandstärke einer Lasche (1, 1a, 1b) horizontal gegeneinander versetzt ist.

10. Kettenförderer nach einem der vorhergehenden Ansprüche, dadurch gekennzeichnet, dass in die Oberseite der Tragschiene (5) eine Längsnut (54) eingelassen ist, und dass die Führungselemente (2) mit in diese Längsnut (54) eingreifenden Nocken (21) versehen sind.

11. Kettenförderer nach einem der Ansprüche 1 bis 9, dadurch gekennzeichnet, dass die Tragschiene (5) auf der Oberseite eine Lauffläche (55) aufweist, welche seitlich von zwei tiefer liegenden Führungsflächen (56, 57) begrenzt ist, und dass die Führungselemente (2a) zwei seitliche Führungsarme (25, 26) aufweisen, welche mit den Führungsflächen (56, 57) zusammenzuarbeiten bestimmt sind.

12. Kettenförderer nach einem der vorhergehenden Ansprüche, wobei die Tragrollen (4) an Bolzen (3) abgestützt sind, dadurch gekennzeichnet, dass die Laschen (1) mit Ausnehmungen (13) zum Durchführen der Bolzen (3) versehen sind, und dass die Laschen (1) im Bereich dieser Ausnehmungen (13) mit plastisch verformbaren Fixierelementen (14) versehen sind, welche durch Umbiegen die Bolzen (3) im eingebauten Zustand fixieren.

13. Kettenförderer nach einem der Ansprüche 3 bis 11, dadurch gekennzeichnet, dass beide Schenkel (11, 12) der Laschen (1) mit Ausnehmungen (15) zur Aufnahme und Arretierung der Führungselemente (2) versehen sind.

14. Kettenförderer nach Anspruch 13, dadurch gekennzeichnet, dass die Führungselemente (2) mit Rast- und/oder Klemmorganen versehen sind, mittels welchen die Führungselemente (2) sicher an den Laschen (1) fixierbar sind.

15. Kettenförderer nach einem der vorhergehenden Ansprüche, dadurch gekennzeichnet, dass beide Enden der Rollenkette (6) mittels eines Hilfsriemens (7) zu einem umlaufenden, endlosen Fördermittel verbunden sind, wobei die Länge der Rollenkette (6) höchstens 60% des gesamten Fördermittels beträgt.

16. Kettenförderer nach einem der vorhergehenden Ansprüche, dadurch gekennzeichnet, dass die Führungselemente (2) aus einem Kunststoff gefertigt sind, welcher gute, selbstschmierende Eigenschaften aufweist.

17. Kettenförderer nach einem der Ansprüche 10 bis 16, dadurch gekennzeichnet, dass die Führungselemente (2) einen zentralen Führungsnocken (21) sowie zwei seitliche Tragzapfen (22, 23) aufweisen, wobei der eine Tragzapfen (23) um die Wandstärke eines Schenkels (11, 12) einer Lasche (1) länger ist als der andere Führungszapfen (22).

## Claims

1. Chain conveyor having a roller chain (6), a bearing rail (5) to support the roller chain (6) vertically, and having deflection devices (31, 32) arranged at the ends to deflect the roller chain (6) and to subdivide the latter into an upper and a lower chain run (6a, 6b), the roller chain (6) having a large number of bearing rollers (4), which are connected to one another by means of chain plates (1), and provision being made, between the bearing rollers (4) on the bearing rail (5), for a number of guide elements (2) of discrete construction to guide the roller chain (6) laterally, characterized in that the bearing rail (5) has on its underside a hollow space (51) which at least partly accommodates the lower chain run (6b), in that the guide elements (2) project beyond the chain plates (1) of the upper chain run (6a), both downwards towards the bearing rail (5) and at the sides, and in that that region (21) of the guide elements (2) which projects downwards beyond the chain plates (1) is designed to guide the upper chain run (6a), whereas that region (22, 23) of the guide elements (2) which projects laterally beyond the chain plates (1) is designed for the guidance and vertical support of the lower chain run (6b), which is at least partly accommodated in the hollow space (51).

2. Chain conveyor according to Claim 1, characterized in that the hollow space (51) of the bearing rail (5) has arranged in it two auxiliary rails (52, 53), whose clear spacing is greater than the width of a chain plate (1) but less than the width of a guide element (2), so that those regions (22, 23) of the guide elements (2) which project laterally beyond the chain plate (1) support the lower chain run vertically on the auxiliary rails (52, 53).

3. Chain conveyor according to Claim 2, characterized in that the chain plates (1), as viewed in cross section, are essentially of U-shaped design, having two limbs (11, 12) and a base part (10) located between them, the base part (10) of the chain plates (1) of the upper chain run (6a) being directed upwards in each case.

4. Chain conveyor according to Claim 3, characterized in that the two end regions of the base part (10) of a chain plate (1a, 1b) have a step (19a) or are of inclined design (19b).

5. Chain conveyor according to one of the preceding claims, characterized in that the average length of the base part (10) corresponds at least approximately to the axle spacing of two adjacent bearing rollers (4), the base part (10) of the chain plates (1) being designed as the top cover of the roller chain (6) and protecting both the bearing rail (5) and the bearing rollers (4) against soiling.

6. Chain conveyor according to one of Claims 3 to 5, characterized in that the base part (10) of the chain plates is designed on the top as a support surface for goods to be conveyed on the roller chain (6), and is provided with means (18) which increase the horizontal transmission of force between the goods to be conveyed and the roller chain (6).

7. Chain conveyor according to Claim 5 or 6, characterized in that the base part (10) is provided with two cutouts (16), which are arranged along one limb (11, 12) and whose width (b2) is greater than the wall thickness of a limb (11, 12).

8. Chain conveyor according to one of the preceding claims, characterized in that the roller chain (6) comprises uniform chain plates (1, 1a, 1b),

9. Chain conveyor according to Claim 8, characterized in that adjacent chain plates (1, 1a, 1b) are arranged one after another, in each case rotated through 180° about their vertical axis, and in that adjacent chain plates (1, 1a, 1b), as viewed in the longitudinal direction of the roller chain, are each offset horizontally with respect to each other by the wall thickness of a chain plate (1, 1a, 1b).

10. Chain conveyor according to one of the preceding claims, characterized in that a longitudinal groove (54) is let into the top of the bearing rail (5), and in that the guide elements (2) are provided with cams (21) which engage in this longitudinal groove (54).

11. Chain conveyor according to one of Claims 1 to 9, characterized in that, on the top, the bearing rail (5) has a running surface (55) which is bounded at the sides by two guide surfaces (56, 57) which are placed lower down, and in that the guide elements (2a) have two lateral guide arms (25, 26) which are intended to interact with the guide surfaces (56, 57).

12. Chain conveyor according to one of the preceding claims, the bearing rollers (4) being supported on pins (3), characterized in that the chain plates (1) are provided with recesses (13) for the pins (3) to be led through, and in that in the region of these recesses (13) the chain plates (1) are provided with plastically deformable fixing elements (14) which, by bending over, fix the pins (3) when they are installed.

13. Chain conveyor according to one of Claims 3 to 11, characterized in that both limbs (11, 12) of the chain plates (1) are provided with recesses (15) to accommodate and lock the guide elements (2).

14. Chain conveyor according to Claim 13, characterized in that the guide elements (2) are provided with latching and/or clamping members, by means of which the guide elements (2) can be fixed securely to the chain plates (1).

15. Chain conveyor according to one of the preceding claims, characterized in that both ends of the roller chain (6) are connected by means of an auxiliary belt (7) to a circulating, endless conveying means, the length of the roller chain (6) being at most 60% of the overall conveying means.

16. Chain conveyor according to one of the preceding claims, characterized in that the guide elements (2) are produced from a plastic which has good self-lubricating properties.

17. Chain conveyor according to one of Claims 10 to 16, characterized in that the guide elements (2) have a central guide cam (21) and two lateral bearing pegs (22, 23), one bearing peg (23) being longer, by the wall thickness of a limb (11, 12) of a chain plate (1), than the other bearing peg (22).

## Revendications

1. Transporteur à chaîne comprenant une chaîne à rouleaux (6), un rail porteur (5), servant à soutenir verticalement la chaîne à rouleaux (6), et des dispositifs de renvoi (31, 32) disposés du côté des extrémités et servant à renvoyer la chaîne à rouleaux (6) et à diviser celle-ci en un brin supérieur de chaîne et un brin inférieur de chaîne (6a, 6b), la chaîne à rouleaux (6) comprenant de multiples rouleaux porteurs (4) qui sont reliés entre eux au moyen de maillons (1), tandis que de multiples éléments de guidage (2) réalisés d'une manière discontinue sont prévus pour le guidage latéral de la chaîne à rouleaux (6), entre les rouleaux porteurs (4), sur le rail porteur (5), caractérisé en ce que, sur son côté inférieur, le rail porteur (5) comporte une cavité (51) logeant au moins partiellement le brin inférieur de chaîne (6b), en ce que les éléments de guidage (2) dépassent des maillons (1) du brin supérieur de chaîne (6a) aussi bien vers le bas, en direction du rail de guidage (5), que sur les côtés et en ce que la zone (21) des éléments de guidage (2) qui dépasse des maillons (1) vers le bas est agencée pour guider le brin supérieur de chaîne (6a), tandis qu'en revanche, la zone (22, 23) des éléments de guidage (2) qui dépasse transversalement des maillons (1) est agencée pour guider et soutenir verticalement le brin inférieur de chaîne (6b) logé au moins partiellement dans la cavité (51).

2. Transporteur à chaîne suivant la revendication 1, caractérisé en ce qu'il est prévu, disposés dans la cavité (51) du rail porteur (5), deux rails auxiliaires (52, 53) dont la distance d'ouverture est supérieure à la largeur d'un maillon (1), mais inférieur à la largeur d'un élément de guidage (2), de sorte que les deux parties (22, 23) des éléments de guidage (2) qui dépassent transversalement des maillons (1) soutiennent verticalement le brin inférieur de chaîne sur les rails auxiliaires (52, 53).

3. Transporteur à chaîne suivant la revendication 2, caractérisé en ce que, vu en coupe transversale, les maillons (1) sont réalisés essentiellement en forme de U, en comportant deux joues (11, 12) et une partie de base (10) située entre celles-ci, la partie de base (10) des maillons (1) du brin supérieur de chaîne (6a) étant, pour chacun, tournée vers le haut.

4. Transporteur à chaîne suivant la revendication 3, caractérisé en ce que les deux zones d'extrémité de la partie de base (10) d'un maillon (1a, 1b) comportent un épaulement (19a) ou sont réalisées d'une manière inclinée (19b).

5. Transporteur à chaîne suivant l'une des revendications précédentes, caractérisé en ce que la longueur moyenne de la partie de base (10) correspond au moins approximativement à l'entraxe de deux rouleaux porteurs (4) voisins, la partie de base (10) des maillons (1) étant réalisée comme un recouvrement supérieur de la chaîne à rouleaux (6) et protégeant d'un encrassement aussi bien le rail porteur (5) que les rouleaux porteurs (4).

6. Transporteur à chaîne suivant l'une des revendications 3 a 5, caractérisé en ce que, du côté supérieur, la partie de base (10) des maillons est réalisée sous forme d'une surface d'appui pour des produits à transporter sur la chaîne à rouleaux (6) et est pourvue de moyens (18) accroissant la transmission de force horizontale entre les produits à transporter et la chaîne à rouleaux (6).

7. Transporteur à chaîne suivant la revendication 5 ou 6, caractérisé en ce que la partie de base (10) est pourvue de deux entailles (16) qui sont disposées le long d'une joue (11, 12) et dont la largeur (b2) est supérieure à l'épaisseur de paroi d'une joue (11, 12).

8. Transporteur à chaîne suivant l'une des revendications précédentes, caractérisé en ce que la chaîne à rouleaux (6) est constituée de maillons (1, 1a, 1b) uniformes.

9. Transporteur à chaîne suivant la revendication 8, caractérisé en ce que des maillons (1, 1a, 1b) voisins sont respectivement disposés l'un à la suite de l'autre dans une position retournée de 180° autour de leur axe vertical et en ce que, vu suivant la direction longitudinale de la chaîne à rouleaux, des maillons voisins (1, 1a, 1b) sont respectivement décalés horizontalement l'un par rapport à l'autre de l'épaisseur de paroi d'un maillon (1, 1a, 1b).

10. Transporteur à chaîne suivant l'une des revendications précédentes, caractérisé en ce qu'une rainure longitudinale (54) est ménagée dans la face supérieure du rail porteur (5) et en ce que les éléments de guidage (2) sont pourvus de saillies (21) s'emboîtant dans cette rainure longitudinale (54).

11. Transporteur à chaîne suivant l'une des revendications 1 à 9, caractérisé en ce que, du côté supérieur, le rail porteur (5) comporte une surface de roulement (55) qui est délimitée transversalement par deux surfaces de guidage (56, 57) situées plus bas et en ce que les éléments de guidage (2a) comportent deux bras de guidage latéraux (25, 26) qui sont déterminés pour coopérer avec les surfaces de guidage (56, 57).

12. Transporteur à chaîne suivant l'une des revendications précédentes, dans lequel les rouleaux porteurs (4) prennent appui sur des axes (3), caractérisé en ce que les maillons (1) sont pourvus de trous (13) servant au passage des axes (3) et en ce que, dans la zone de ces trous (13), les maillons (1) sont pourvus d'éléments de fixation (14) déformables plastiquement qui, par pliage, fixent les axes (3) à l'état monté.

13. Transporteur à chaîne suivant l'une des revendications 3 à 11, caractérisé en ce que les deux joues (11, 12) des maillons (1) sont pourvues d'évidements (15) servant à recevoir et immobiliser les éléments de guidage (2).

14. Transporteur à chaîne suivant la revendication 13, caractérisé en ce que les éléments de guidage (2) sont pourvus d'organes d'enclenchement et/ou de serrage au moyen desquels les éléments de guidage (2) peuvent être fixés d'une manière sûre sur les maillons (1).

15. Transporteur à chaîne suivant l'une des revendications précédentes, caractérisé en ce que les deux extrémités de la chaîne à rouleaux (6) sont reliées au moyen d'une courroie auxiliaire (7) de façon à former des moyens de transport sans fin faisant un tour complet, la longueur de la chaîne à rouleaux (6) valant au maximum 60% de l'ensemble des moyens de transport.

16. Transporteur à chaîne suivant l'une des revendications précédentes, caractérisé en ce que les éléments de guidage (2) sont réalisés en une matière plastique qui possède de bonnes propriétés d'auto-lubrification.

17. Transporteur à chaîne suivant l'une des revendications 10 à 16, caractérisé en ce que les éléments de guidage (2) comportent une saillie centrale de guidage (21) et deux tétons porteurs latéraux (22, 23), un premier téton porteur (23) étant plus long, de l'épaisseur de paroi d'une joue (11, 12) d'un maillon (1), que l'autre têton de guidage (22).
